(19) Europäisches Patentamt
European Patent Office
Office européen des brevets

(11) **EP 3 650 281 B1**

(12) **EUROPÄISCHE PATENTSCHRIFT**

(45) Veröffentlichungstag und Bekanntmachung des Hinweises auf die Patenterteilung:
**03.11.2021 Patentblatt 2021/44**

(51) Int Cl.:
***B60R 16/03*** *(2006.01)* ***H02J 7/00*** *(2006.01)*

(21) Anmeldenummer: **18205578.0**

(22) Anmeldetag: **12.11.2018**

(54) **ELEKTRISCHES ENERGIEÜBERTRAGUNGSSYSTEM**

ELECTRIC ENERGY TRANSFER SYSTEM

SYSTÈME DE TRANSMISSION D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.05.2020 Patentblatt 2020/20**

(73) Patentinhaber: **Lisa Dräxlmaier GmbH**
**84137 Vilsbiburg (DE)**

(72) Erfinder: **Wortberg, Michael**
**84405 Dorfen (DE)**

(56) Entgegenhaltungen:
**DE-A1-102014 207 993     DE-B3-102017 108 516**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 650 281 B1

## Beschreibung

### Technisches Gebiet

Die vorliegende Erfindung betrifft ein elektrisches Energieübertragungssystem. Ferner betrifft die Erfindung ein entsprechendes Leitungssystem.

### Stand der Technik

Die vorliegende Erfindung wird im Folgenden hauptsächlich in Verbindung mit Kraftfahrzeugen beschrieben. Es versteht sich, dass die vorliegende Erfindung aber auch in anderen Anwendungen eingesetzt werden kann.

In modernen Fahrzeugen werden zunehmend Funktionen integriert, welche den Fahrer beim Steuern des Fahrzeugs unterstützen bzw. dem Fahrer das Steuern des Fahrzeugs in bestimmten Situationen abnehmen.

Bisherige Fahrzeugsysteme, bei welchen der Fahrer stets die Kontrolle über das Fahrzeug hat, dürfen in einem Fehlerfall keine unsichere Situation provozieren und werden entsprechend ausgelegt. Solche Fahrzeugsysteme werden daher auch als "Fail Save" bezeichnet. Im einfachsten Fall kann ein solches System z.B. abgeschaltet werden.

Wird dem Fahrer die Kontrolle über das Fahrzeug aber durch ein Assistenzsystem abgenommen, darf ein solches System auch im Fehlerfall nicht abgeschaltet werden. Vielmehr muss ein solches System das Fahrzeug weiterhin sicher bewegen, z.B. bis es auf dem Standstreifen abgestellt ist oder der Fahrer die Kontrolle übernimmt. Solche Fahrzeugsysteme werden daher auch als "Fail Operational" bezeichnet.

Mit dem Übergang von "Fail Save" Systemen zu "Fail Operational" Systemen im Fahrzeug wird die sichere Energieversorgung über das Energiebordnetz solcher Systeme wichtig für die funktionale Sicherheit. Für das Bordnetz ergeben sich also erhöhte Anforderungen an die Erkennung von Fehlern in der Energieversorgung.

Die DE 10 2014 207 993 A1 offenbart eine Energieübertragungsvorrichtung und ein Bordnetz. Die DE 10 2017 108 516 B3 offenbart eine unterbrechungsfreie Stromversorgung.

Versuche, eine vollständige Verfügbarkeit der elektrischen Energieversorgung durch qualitätssteigernde Maßnahmen, wie z.B. eine (mehrfach) redundante Auslegung, zu sichern, führen zu erheblichen Mehrkosten und führen schlussendlich nicht zu funktionaler Sicherheit. Fehler in der Energieversorgung treten heute auf und werden in der Zukunft grundsätzlich auftreten. Es müssen daher Fehler sicher erkannt und mittels eines zu implementierenden Sicherheitskonzeptes beherrscht werden, sodass ein Fehler erster Ordnung noch nicht zur Verletzung eines Sicherheitszieles führt.

### Beschreibung der Erfindung

Eine Aufgabe der Erfindung ist es daher, unter Einsatz konstruktiv möglichst einfacher Mittel eine sichere Diagnose von Fehlern in einem Energieversorgungssystem zu ermöglichen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Ein erfindungsgemäßes elektrisches Energieübertragungssystem zur Übertragung elektrischer Energie an einen elektrischen Verbraucher, weist auf: einen Leistungseingang, welcher mit einer Energiequelle koppelbar ist und ausgebildet ist, elektrische Energie von der Energiequelle zu empfangen, einen ersten Verteilerknoten, welcher eingangsseitig mit dem Leistungseingang gekoppelt ist und einen ersten Ausgang und einen zweiten Ausgang aufweist, einen Hauptenergieübertragungszweig, welcher eingangsseitig mit dem ersten Ausgang des Verteilerknotens gekoppelt ist und eine Serienschaltung aus einem ersten Widerstand und einer Hauptenergieübertragungsleitung aufweist, einen Sekundärenergieübertragungszweig, welcher eingangsseitig mit dem zweiten Ausgang des Verteilerknotens gekoppelt ist und eine Serienschaltung aus einem zweiten Widerstand und einer Sekundärenergieübertragungsleitung aufweist, einen zweiten Verteilerknoten, welcher eingangsseitig mit einem Ausgang des Hauptenergieübertragungszweigs und einem Ausgang des Sekundärenergieübertragungszweigs gekoppelt ist und welcher über einen Leistungsausgang mit dem elektrischen Verbraucher koppelbar ist, und eine Messeinrichtung, welche mit dem Knotenpunkt zwischen dem ersten Widerstand und der Hauptenergieübertragungsleitung und dem Knotenpunkt zwischen dem zweiten Widerstand und der Sekundärenergieübertragungsleitung gekoppelt ist und ausgebildet ist, zumindest eine Widerstandsveränderung der Hauptenergieübertragungsleitung basierend auf einer Spannungsmessung zwischen den Knotenpunkten zu bestimmen.

Ein erfindungsgemäßes Leitungssystem zur Übertragung elektrischer Energie an einen elektrischen Verbraucher weist auf: einen Leistungseingang, welcher mit einer Energiequelle koppelbar ist und ausgebildet ist, elektrische Energie von der Energiequelle zu empfangen, einen ersten Verteilerknoten, welcher eingangsseitig mit dem Leistungseingang gekoppelt ist und einen ersten Ausgang und einen zweiten Ausgang aufweist, einen Hauptenergieübertragungszweig, welcher eingangsseitig mit dem ersten Ausgang des Verteilerknotens gekoppelt ist und eine Serienschaltung aus einem ersten Widerstand und einer Hauptenergieübertragungsleitung aufweist, einen Sekundärenergieübertragungszweig, welcher eingangsseitig mit dem zweiten Ausgang des Verteilerknotens gekoppelt ist und eine Serienschaltung aus einem zweiten Widerstand und einer Sekundärenergieübertragungsleitung aufweist, und einen zweiten Verteilerknoten, welcher eingangsseitig mit einem Ausgang des Hauptenergieübertragungszweigs und einem Ausgang des Sekundärenergieübertragungszweigs gekoppelt ist und welcher über einen Leistungsausgang mit dem elektrischen Verbraucher koppelbar ist.

Die vorliegende Erfindung basiert auf der Erkenntnis, dass für die Wirksamkeit eines Sicherheitskonzepts die Diagnoseabdeckung unverzichtbar ist. Besteht ein Sicherheitskonzept z.B. in der redundanten Ausführung einer Versorgungsleitung, so muss erkannt werden, wenn eine der Versorgungsleitungen ihre spezifizierte Funktion ("Laststrom tragen") nicht ausführen kann.

Würde der latente Fehler "Leitung kann Laststrom nicht tragen" nicht erkannt, so wäre faktisch keine Redundanz vorhanden und ein Ausfall der anderen Leitung würde zur Verletzung des Sicherheitsziels "Fail Operational" führen. Ein wirksames Sicherheitskonzept muss daher Fehler erster Ordnung erkennen und das System dann mit der verbliebenen Systemleistung in den sicheren Zustand überführen.

Da moderne Fahrzeugsysteme in der Regel elektrische bzw. elektronische Systeme sind, ist insbesondere deren Energieversorgung sicherzustellen bzw. eine Degradation der Energieversorgung frühzeitig zu Erkennen.

Eine Diagnose der Energieversorgung sollte folglich nicht nur erkennen können, dass eine Leitungsverbindung komplett ausgefallen ist (hochohmig). Vielmehr sollte eine solche Diagnose auch eine Alterung (Degradation) der Leitungsverbindung erkennen. Auch bei einem redundanten Aufbau erhöht diese Degradations-Diagnose die Sicherheits-Integrität, denn eine degradierte Leitung stellt einen latenten Fehler dar, da sie u.U. bei einem Komplettausfall der zweiten Leitungsverbindung nicht den gesamten Laststrom tragen kann.

Die Degradation einer Leitung inkl. Kontakte wirkt sich derart aus, dass der Übergangswiderstand der Leitung über eine Schwelle ansteigt. Dieser Anstieg des Übergangswiderstands ist folglich zu erkennen.

Üblicherweise wird eine Diagnose einer Versorgungsleitung durch eine Strommessung in der Versorgungsleitung und eine Spannungsmessung am Anfang und am Ende der Versorgungsleitung in Verbindung mit einer entsprechenden Berechnung des Leitungswiderstands bewerkstelligt.

Üblicherweise erfolgt die Einspeisung in die Versorgungsleitung in einem Stromverteiler. Dort werden die Spannung und der Strom auf der einen Seite der Versorgungsleitung gemessen. Beispielsweise misst eine intelligente Last die Spannung auf der anderen Seite der Leitung. Der Übergangswiderstand der Leitung inkl. Kontakte kann dann grundsätzlich über die Gleichung $R = (U\_1 - U\_2) / I$ bestimmt werden.

In einer Beispielkonfiguration kann z.B. eine 6mm$^2$-Leitung mit Flachkontakten für die Steckeraufnahmen des Stromverteilers und des Verbrauchers vorhanden sein. Eine kritische Degradation dieser Versorgungsleitung würde z.B. dann auftreten, wenn die Flachkontakte eine Erhöhung des Übergangswiderstandes aufweisen würden. Liegt der nominelle Überganswiderstand des Kontaktes z.B. bei 0,5 mOhm (Milliohm), so zeigt eine Erhöhung des Übergangswiderstandes auf 2 mOhm eine kritische Degradation des Kontaktes an.

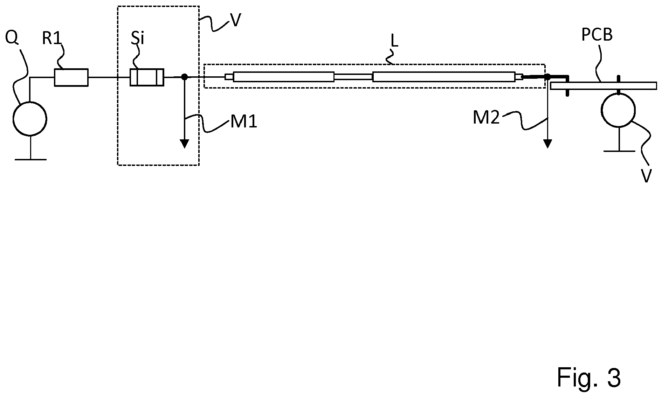

Der Übergangswiderstand der gesamten Leitung kann bei Raumtemperatur bei einer angenommenen Länge von ca. 3 m z.B. 11,4 mOhm betragen. Für die Erkennung der Degradation eines Kontaktes müsste die Diagnose also eine Erhöhung des Übergangswiderstandes von 11,4 mOhm auf 12.9 mOhm erkennen können. Eine solche Leitung ist beispielsweise in Fig. 3 dargestellt.

Für die Umsetzung einer Messfunktion, die eine Erhöhung im Bereich von einzelnen mOhm erkennen kann, bestehen die folgenden Herausforderungen:

1. Temperaturdrift der Leitung
Wird die Leitung von 25 °C auf 100 °C erwärmt, so erhöht sich ihr Übergangswiderstand um ca. 3,6 mOhm. Diese erlaubte Widerstandserhöhung darf nicht als Fehler erkannt werden und muss kompensiert werden. Entlang der Leitung ist allerdings eine Temperatur-Messung üblicherweise nicht vorgesehen.

2. Asynchrone Strommessung im Verteiler und in der Last
Die Messung im Stromverteiler und die Messung in der Last werden durch zwei unabhängige Baugruppen mit jeweils einem Mikrocontroller mit ADC (Analog-Digital-Wandler) durchgeführt. Die Mikrocontroller triggern z.B. alle 5 ms eine Spannungsmessung. Da die Baugruppen entfernt voneinander angeordnet sind, sind diese nicht synchronisiert. Daher wird sich ein Jitter zwischen den zwei ADCs einstellen, der typischerweise 1 bis 10 ms betragen kann. Ein weiteres Problem ist hier auch die Berücksichtigung der Bus-Kommunikationslaufzeiten, da die Messstellen die Messdaten üblicherweise z.B. über den CAN-Bus eines Fahrzeugs übertragen. Die Anwendung der Gleichung $R=AU/I$ antizipiert allerdings Messwerte $U\_1$, $U\_2$, $I$, die sich auf einen (synchronen) Zeitpunkt beziehen. Der Effekt des Jitters kann als eine quasi-stochastische Störgröße angesehen werden.

3. Messfehler

Die Strom- und Spannungsmessung wird üblicherweise mit vorhandenen Mitteln der Mikrocontroller erfolgen und höchstens mit einer Einpunkt-Kalibrierung in der Fertigung kalibriert. Die so möglichen Messtoleranzen belaufen sich typischerweise auf:

Spannungsmessung: +/- 3 %
Strommessung: +/-8 %
Des Weiteren führt die Wert-Quantisierung während der Analog-zu-Digital-Konversion zu einer weiteren quasi-stochastischen Störgröße.

4. Masseversatz

Die Masserückführung der Last erfolgt in Fahrzeugen an einem anderen Ort als die Masseverbindung der Messstellen. So ist in Fahrzeugen mit einem Masseversatz von bis zu 2 V zu rechnen. Der Masseversatz trägt direkt zum Messfehler bei.

5. Verfügbare Ressourcen der Mikrocontroller sind begrenzt:
Die verfügbare Mikrocontroller-Performance begrenzt die Abtastrate der ADC. So ist bei üblichen Mikrocontrollern eine Spannungsmessung alle 1 ms bereits mit erheblichen Einschränkungen bezüglich der restlichen Funktionen auf dem Mikrocontroller verbunden. Des Weiteren sollte die Übertragung über CAN möglichst nicht mehr als alle 10 ms erfolgen, da die Bus-Last sonst zu sehr angehoben wird.

Trotz der Punkte 1. bis 3. soll es nicht zu einer false-positiv Erkennung der Alterung kommen. Pseudofehler, die zum Übergang in den Notmodus des Fahrzeuges führen, würden die Akzeptanz der Technologie sofort erheblich beschädigen und würden zu Rückrufen führen.

Eine sichere Erkennung von Problemen in der Energieversorgung ist mit der oben beschriebenen Anordnung allerdings nicht zu bewerkstelligen.

Aus diesem Grund sieht die vorliegende Erfindung das elektrische Energieübertragungssystem vor. Das elektrische Energieübertragungssystem sieht vor, dass die Energieübertragung über zwei Leitungszweige erfolgt, die elektrisch parallel zueinander geschaltet sind. Über einen Leitungseingang wird die elektrische Energie von einer Energiequelle empfangen und über den ersten Verteilerknoten in die zwei Leitungszweige eingespeist. Am Ende der Leitungszweige wird die elektrische Energie über den zweiten Verteilerknoten und den Leistungsausgang an den elektrischen Verbraucher übertragen. Unter einer eingangsseitigen Kopplung ist dabei zu verstehen, dass das jeweilige Element über einen seiner Eingänge mit dem entsprechenden Gegenstück gekoppelt ist.

Sowohl der Hauptenergieübertragungszweig als auch der Sekundärenergieübertragungszweig weisen jeweils eine Serienschaltung aus einem Widerstand und einer Leitung auf.

Zur Diagnose des Widerstands zumindest des Hauptenergieübertragungszweigs bzw. der Hauptenergieübertragungsleitung, ist die Messeinrichtung vorgesehen. Die Messeinrichtung ist mit dem Knotenpunkt zwischen dem ersten Widerstand und der Hauptenergieübertragungsleitung und mit dem Knotenpunkt zwischen dem zweiten Widerstand und der Sekundärenergieübertragungsleitung gekoppelt.

Es versteht sich, dass sowohl die Hauptenergieübertragungsleitung als auch die Sekundärenergieübertragungsleitung z.B. mehrere Leitungssegmente und Verbindungselemente aufweisen können. Die Hauptenergieübertragungsleitung und die Sekundärenergieübertragungsleitung müssen nicht als durchgängige Leitungen ausgebildet sein. Vielmehr können die Hauptenergieübertragungsleitung und die Sekundärenergieübertragungsleitung auch jeweils einen Verbund bzw. eine Kette aus elektrisch miteinander verbundenen Leitungen aufweisen.

Die Anordnung in dem elektrischen Energieübertragungssystem stellt eine Messbrücke dar, in welcher der Hauptenergieübertragungszweig mit zwei Serienwiderständen (erster Widerstand und Hauptenergieübertragungsleitung) parallel zu dem Sekundärenergieübertragungszweig mit zwei Serienwiderständen (zweiter Widerstand und Sekundärenergieübertragungsleitung) liegt.

Durch die Messung der Spannung zwischen den Knotenpunkten in dem Hauptenergieübertragungszweig und dem Sekundärenergieübertragungszweig kann folglich zumindest eine Widerstandsveränderung der Hauptenergieübertragungsleitung erkannt werden.

Die vorliegende Erfindung ersetzt also die Messung an zwei unterschiedlichen Enden der Leitung durch eine einzelne Spannungsmessung zwischen zwei Zweigen einer Art Doppelleitung. Folglich kann sehr einfach und sicher eine Widerstandsänderung in dem System ohne die oben genannten Probleme herkömmlicher Systeme erkannt werden.

Weitere Ausführungsformen und Weiterbildungen ergeben sich aus den Unteransprüchen sowie aus der Beschreibung unter Bezugnahme auf die Figuren.

In einer Ausführungsform kann der erste Widerstand als Sicherungselement ausgebildet sein. Zusätzlich oder alternativ kann der zweite Widerstand als Sicherungselement ausgebildet sein.

Die Sicherungselemente dienen dazu, die einzelnen Leitungen gegen Überlastung zu schützen. Gleichzeitig weisen Sicherungselemente aber einen Widerstand auf. Folglich können die Sicherungselemente auch als Widerstände in der Messbrücke des elektrischen Energieübertragungssystems genutzt werden.

Es kann also durch den Einsatz der Sicherungselemente die Absicherung der Leitungen sichergestellt werden. Gleichzeitig können die nötigen Messwiderstände bereitgestellt werden.

In einer weiteren Ausführungsform kann der Sekundärenergieübertragungszweig eine Sicherung aufweisen, welche zwischen der Sekundärenergieübertragungsleitung und dem zweiten Verteilerknoten angeordnet ist.

Die Sicherung dient dazu, die Sekundärenergieübertragungsleitung gegenüber der Hauptenergieübertragungsleitung auf der Verbraucherseite abzusichern. Beispielsweise könnte eine der zwei Leitungen einen Kurzschluss gegen Masse aufweisen. Wären die zwei Leitungen nicht separat auf der Verbraucherseite gegeneinander abgesichert, könnte der Strom der einen Leitung über die Verbraucherseite zu dem Kurzschluss auf der anderen Leitung fließen. Folglich würden beide Leitungen gestört, z.B. weil beide Sicherungselemente auf der Quellenseite auslösen.

In noch einer Ausführungsform kann die Stromtragfähigkeit der Hauptenergieübertragungsleitung größer sein, als die Stromtragfähigkeit der Sekundärenergieübertragungsleitung.

Die Hauptenergieübertragungsleitung stellt den Hauptpfad für die zu übertragende elektrische Leistung dar. Im Gegensatz dazu dient die Sekundärenergieübertragungsleitung dazu, die Messbrücke aufzubauen, die gemäß der vorliegenden Erfindung genutzt wird, um die Widerstandsänderungen in der Hauptenergieübertragungsleitung zu erfassen.

Die Sekundärenergieübertragungsleitung stellt folglich keinen Rückkanal dar. Vielmehr ist die Sekundärenergieübertragungsleitung ein paralleler Pfad zur Übertragung der elektrischen Leistung an den Verbraucher. Für das Messergebnis der Spannungsmessung in der Messbrücke mit der Messeinrichtung ist folglich das Verhältnis der Widerstände in den Zweigen der Messbrücke ausschlaggebend.

Insbesondere ist die gemessene Spannung gleich null, wenn das Verhältnis des ersten Widerstands zu dem zweiten Wiederstand gleich dem Verhältnis des Widerstandswerts der Hauptenergieübertragungsleitung zu dem Widerstandswert der Sekundärenergieübertragungsleitung ist.

Verändert sich der Widerstandswert der Hauptenergieübertragungsleitung bei einer Degradation der Hauptenergieübertragungsleitung, wird dieser größer. Folglich wird in der Messbrücke eine Spannung ungleich null gemessen.

Der Betrag der gemessenen Spannung kann folglich als Indiz bzw. als Indikator für die Veränderung bzw. den Grad der Degradation der Sekundärenergieübertragungsleitung genutzt werden.

Beispielsweise kann ein Grenzwert für den Betrag der gemessenen Spannung vorgegeben werden, ab welchem die Hauptenergieübertragungsleitung als defekt erachtet wird.

In einer weiteren Ausführungsform kann der erste Widerstand als Sicherungselement mit einer größeren Stromtragfähigkeit ausgebildet sein, als der als Sicherungselement ausgebildete zweite Widerstand.

Da, wie oben bereits erläutert, die Hauptenergieübertragungsleitung den Hauptpfad für die Energieübertragung bildet, wird über die Sekundärenergieübertragungsleitung eine geringere elektrische Leistung übertragen. Folglich kann das Sicherungselement ebenfalls für eine geringere Leistung dimensioniert werden. Insbesondere wird die Stromtragfähigkeit des ersten Sicherungselements bzw. ersten Widerstands an den maximalen Strom in der Hauptenergieübertragungsleitung angepasst sein. Die Stromtragfähigkeit des zweiten Sicherungselements bzw. zweiten Widerstands wird an den maximalen Strom in der Sekundärenergieübertragungsleitung angepasst sein. Beispielsweise kann das erste Sicherungselement als 80 A Sicherung ausgebildet sein. Das zweite Sicherungselement kann z.B. als 7,5 A Sicherung ausgebildet sein.

In noch einer Ausführungsform kann das Widerstandsverhältnis zwischen der Hauptenergieübertragungsleitung und der Sekundärenergieübertragungsleitung größer oder kleiner sein als das Widerstandsverhältnis zwischen dem ersten Widerstand und dem zweiten Widerstand.

Die Messbrücke kann durch die Wahl der Widerstandsverhältnisse gezielt eingestellt bzw. verstimmt werden. Wird eine derart verstimmte Messbrücke mit drei bekannten Widerstandswerten aufgebaut, kann ferner der vierte Widerstandswert bestimmt werden, wie unten dargestellt. Es versteht sich, dass die weiteren drei benötigten Widerstandswerte vorab bestimmt werden können. Dies kann z.B. in der Produktion bzw. bei der Herstellung des elektrischen Energieübertragungssystems erfolgen. Alternativ kann eine Messung in der Anwendung vorgesehen werden. Dazu können z.B. entsprechende Sensoren vorgesehen werden.

Die Widerstandswerte der Hauptenergieübertragungsleitung und der Sekundärenergieübertragungsleitung können z.B. durch eine geeignete Wahl der Leitungsquerschnitte eingestellt werden.

In einer weiteren Ausführungsform kann das elektrische Energieübertragungssystem einen Stromsensor aufweisen, welcher ausgebildet ist, den Betrag des Stroms, welcher durch den Leistungseingang des ersten Verteilerknotens fließt zu erfassen und der Messeinrichtung bereitzustellen, wobei die Messeinrichtung ausgebildet sein kann, den Widerstandswert der Hauptenergieübertragungsleitung basierend auf der Spannungsmessung und dem gemessenen Betrag des Stroms zu bestimmen. Alternativ kann das elektrische Energieübertragungssystem einen Differenzspannungsmesser aufweisen, welcher ausgebildet ist den Betrag des Spannungsabfalls über dem ersten Widerstand zu messen und der Messeinrichtung bereitzustellen, wobei die Messeinrichtung ausgebildet ist, den Widerstandswert der Hauptenergieübertragungsleitung basierend auf der Spannungsmessung und der Spannungsmessung über dem ersten Widerstand zu bestimmen.

Wie unten ersichtlich (siehe Formel zu R3), wird der Betrag der Spannung Um über die Messbrücke und der Gesamtstrom Im benötigt, um den Widerstandswert der Hauptenergieübertragungsleitung zu berechnen. Beispielsweise kann die Nennspannung der Energiequelle herangezogen werden.

Für die Messung des Stroms kann ein Shunt verwendet werden, der ein zum Gesamtstrom proportionales Spannungssignal zur Verfügung stellt. Als Messgröße kann aber auch der Spannungsabfall eines vorgelagerten Elements wie der einer Stromschiene oder eines Schalt-MOSFET (Metall-Oxid-Halbleiter-Feldeffekttransistor oder engl: metal-oxidesemiconductor field-effect transistor) oder einer Sicherung dienen.

Folglich wird eine sehr exakte Berechnung des Widerstandswerts der Hauptenergieübertragungsleitung möglich.

In einer Ausführungsform kann die Messeinrichtung ausgebildet sein, den Widerstandswert der Hauptenergieübertragungsleitung ferner basierend auf dem Widerstandswert der Sekundärenergieübertragungsleitung, falls vorhanden mit dem dritten Widerstand, und dem Widerstandswert des ersten Widerstands und dem Widerstandswert des zweiten Widerstands zu berechnen.

In der Messeinrichtung kann eine Recheneinheit vorgesehen sein. Diese Recheneinheit kann z.B. folgende Formel nutzen, um den Widerstandswert der Hauptenergieübertragungsleitung zu berechnen:

$$R3 = (R1*R4/(R2+R4)-Um/Ux) / (1 + (Um/(Im*Rges)) - R4/(R2+R4))$$

mit Rges= (R1+R2) || (R3+R4)

Wobei R1 (Sicherungswiderstand z.B. 80 A Sicherung) und R3 (Leitungswiderstand z.B. 6 mm$^2$ Cu-Leitung) den Spannungsteiler der Primärverbindung darstellen und wobei R2 (Sicherungswiderstand z.B. 7,5 A Sicherung) und R4 (Leitungswiderstand z.B 0,35 mm$^2$ Cu-Leitung) den Spannungsteiler der Sekundärverbindung darstellen.

In einer weiteren Ausführungsform muss der Gesamtstrom über die Brücke zur Last nicht gemessen werden. Vielmehr wird neben der Brückenspannung Um(V) der Spannungsabfall U_R1(V) über R1 gemessen. Dabei kann R1 die Sicherung des Primärpfades sein.

Der Widerstand der Primärleitung kann dann berechnet werden mit

$$R3 = (1+Um/U\_R1) * (R1+R4) * R1/R2) - R1$$

Mit einer verstimmten Messbrücke wird folglich nicht nur eine Erfassung der Veränderung des Widerstandswerts der Hauptenergieübertragungsleitung möglich. Vielmehr wird eine explizite Bestimmung des Widerstandswertes möglich.

In einer weiteren Ausführungsform kann die Messeinrichtung einen Speicher aufweisen, welcher ausgebildet ist, den Widerstandswert der Sekundärenergieübertragungsleitung, falls vorhanden mit dem dritten Widerstand, und den Widerstandswert des ersten Widerstands und den Widerstandswert des zweiten Widerstands zu speichern.

Der Speicher kann z.B. ein nicht-flüchtiger Speicher in der Messeinrichtung sein. Es versteht sich, dass der Speicher z.B. in einem Mikrocontroller der Messeinrichtung angeordnet sein kann. Die dort gespeicherten Widerstandswerte können z.B. als Kalibrierwerte bezeichnet werden.

Wie oben bereits erwähnt, können die Widerstandswerte z.B. bei der Produktion des elektrischen Energieübertragungssystems bestimmt und in dem Speicher abgelegt werden. Zusätzlich oder alternativ können aber auch Sensoren vorgesehen werden, um die Widerstandswerte in der Anwendung zu bestimmen.

In noch einer Ausführungsform kann die Messeinrichtung eine Kalibrierschnittstelle aufweisen und ausgebildet sein, den Widerstandswert der Sekundärenergieübertragungsleitung, falls vorahnden mit dem dritten Widerstand, und den Widerstandswert des ersten Widerstands und den Widerstandswert des zweiten Widerstands über die Kalibrierschnittstelle zu empfangen.

Die Kalibrierschnittstelle ermöglicht es, die in dem Speicher abgelegten Widerstandswerte zu aktualisieren. So wird es z.B. möglich, die Widerstandswerte in dem Speicher zu aktualisieren, nachdem das elektrische Energieübertragungssystem in der jeweiligen Anwendung verbaut wurde.

Die Kalibrierschnittstelle kann z.B. eine digitale Schnittstelle, insbesondere eine Busschnittstelle, z.B. eine CAN-Busschnittstelle sein, über welche das elektrische Energieübertragungssystem z.B. mit einem Fahrzeugbordnetz gekoppelt sein kann.

In noch einer Ausführungsform kann die Messeinrichtung einen Differenzverstärker aufweisen, um die Spannungsmessung durchzuführen.

Die zu messenden Spannungen in der Messbrücke können sehr klein sein, z.B. im Bereich weniger 100 mV. Mit einem Differenzverstärker können solche sehr kleinen Spannungen exakt gemessen werden. Folglich kann der Widerstandswert für die Hauptenergieübertragungsleitung sehr exakt bestimmt werden.

In einer weiteren Ausführungsform können der erste Widerstand und der zweite Widerstand thermisch miteinander gekoppelt angeordnet sein.

Unter der Formulierung "thermisch miteinander gekoppelt" ist zu verstehen, dass der erste Widerstand und der zweite Widerstand derart angeordnet sind, dass sie bei einer Änderung der Umgebungstemperatur eine gleichsinnige Temperaturänderung erfahren. Erhöht sich die Umgebungstemperatur, erhöhen sich folglich die Temperaturen des ersten Widerstands und des zweiten Widerstands und umgekehrt.

Eine solche Kopplung kann z.B. dadurch erreicht werden, dass der erste Widerstand und der zweite Widerstand nahe beieinander angeordnet werden, also z.B. auf einer Leiterplatte nebeneinander mit einem Abstand von z.B. weniger als 5 cm, z.B. 1 cm oder 0,5 cm oder weniger.

Da die Materialen des ersten Widerstands und des zweiten Widerstands üblicherweise einen Temperaturkoeffizienten ungleich null aufweisen, ändern sich deren Widerstandswerte mit einer Änderung der Temperatur. In der Messbrücke ist aber das Verhältnis der Widerstandswerte relevant. Da sich auf Grund der thermischen Kopplung die Widerstandswerte gleichsinnig ändern, erfolgt ein Temperaturausgleich implizit bzw. automatisch.

In noch einer Ausführungsform können die Hauptenergieübertragungsleitung und die Sekundärenergieübertragungsleitung thermisch miteinander gekoppelt angeordnet sein.

Auch hier gilt, dass unter der Formulierung "thermisch miteinander gekoppelt" zu verstehen ist, dass die Hauptenergieübertragungsleitung und die Sekundärenergieübertragungsleitung derart angeordnet sind, dass sie bei einer Änderung der Umgebungstemperatur eine gleichsinnige Temperaturänderung erfahren. Erhöht sich die Umgebungstemperatur, erhöhen sich folglich die Temperaturen der Hauptenergieübertragungsleitung und der Sekundärenergieübertragungsleitung und umgekehrt.

Eine solche thermische Kopplung kann z.B. dadurch erreicht werden, dass die Hauptenergieübertragungsleitung und die Sekundärenergieübertragungsleitung nahe beieinander bzw. nebeneinander angeordnet werden, also z.B. gemeinsam in einem Kabelstrang angeordnet bzw. verlegt werden.

Da die Materialen der Hauptenergieübertragungsleitung und der Sekundärenergieübertragungsleitung, z.B. Kupfer oder Aluminium, üblicherweise einen Temperaturkoeffizienten ungleich null aufweisen, ändern sich deren Widerstandswerte mit einer Änderung der Temperatur. In der Messbrücke ist aber das Verhältnis der Widerstandswerte relevant. Da sich auf Grund der thermischen Kopplung die Widerstandswerte gleichsinnig ändern, erfolgt ein Temperaturausgleich implizit bzw. automatisch.

## Kurze Figurenbeschreibung

Nachfolgend werden vorteilhafte Ausführungsbeispiele der Erfindung unter Bezugnahme auf die begleitenden Figuren erläutert. Es zeigen:

Figur 1     ein Blockschaltbild eines Ausführungsbeispiels eines elektrischen Energieübertragungssystems gemäß der vorliegenden Erfindung;

Figur 2     ein Blockschaltbild eines Ausführungsbeispiels eines elektrischen Energieübertragungssystems gemäß der vorliegenden Erfindung; und

Figur 3     ein herkömmliches Energieübertragungssystem.

Die Figuren sind lediglich schematische Darstellungen und dienen nur der Erläuterung der Erfindung. Gleiche oder gleichwirkende Elemente sind durchgängig mit den gleichen Bezugszeichen versehen.

## Detaillierte Beschreibung

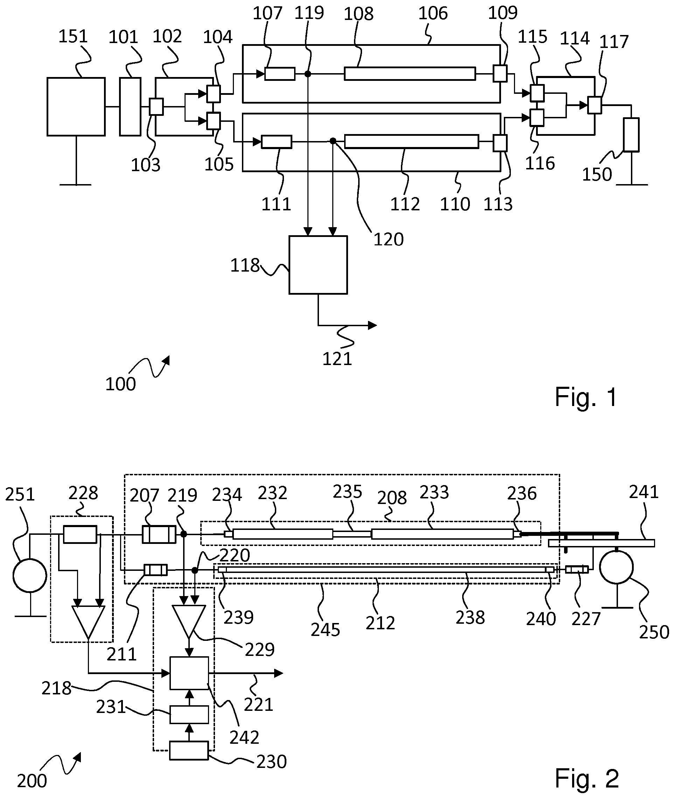

Figur 1 zeigt ein Blockschaltbild eines elektrischen Energieübertragungssystems 100. Das elektrische Energieübertragungssystems 100 dient der Übertragung elektrischer Energie von der Energiequelle 151 an den elektrischen Verbraucher 150.

Das elektrische Energieübertragungssystem 100 weist einen Leistungseingang 101 auf, der das Energieübertragungssystem 100 mit der Energiequelle 151 koppelt und mit dem Eingang 103 eines ersten Verteilerknotens 102 gekoppelt ist. Der erste Verteilerknoten 102 weist einen ersten Ausgang 104 auf, der mit einem Hauptenergieübertragungszweig 106 gekoppelt ist. Ferner weist der erste Verteilerknoten 102 einen zweiten Ausgang 105 auf, der mit einem Sekundärenergieübertragungszweig 110 gekoppelt ist.

Der Hauptenergieübertragungszweig 106 weist eine Serienschaltung aus einem ersten Widerstand 107 und einer Hauptenergieübertragungsleitung 108 auf. Der Sekundärenergieübertragungszweig 110 weist eine Serienschaltung aus einem zweiten Widerstand 111 und einer Sekundärenergieübertragungsleitung 112 auf.

Das elektrische Energieübertragungssystem 100 weist ferner einen zweiten Verteilerknoten 114 auf. Der zweite Verteilerknoten 114 ist eingangsseitig mit dem Ausgang 109 des Hauptenergieübertragungszweigs 106 und dem Ausgang 113 des Sekundärenergieübertragungszweigs 110 gekoppelt. Ferner ist der zweite Verteilerknoten 114 über einen Leistungsausgang 117 mit dem elektrischen Verbraucher 150 gekoppelt.

Das elektrische Energieübertragungssystem 100 weist ferner eine Messeinrichtung 118 auf, die mit dem Knotenpunkt 119 zwischen dem ersten Widerstand 107 und der Hauptenergieübertragungsleitung 108 und dem Knotenpunkt 120 zwischen dem zweiten Widerstand 111 und der Sekundärenergieübertragungsleitung 112 gekoppelt ist.

Es ist zu erkennen, dass der Hauptenergieübertragungszweig 106 und der Sekundärenergieübertragungszweig 110 elektrisch parallele Zweige zwischen der Energiequelle 151 und dem Verbraucher 150 darstellen. Es wird also über beide Zweige elektrischer Strom von der Energiequelle 151 zum Verbraucher 150 übertragen. Gleichzeitig können der Hauptenergieübertragungszweig 106 und der Sekundärenergieübertragungszweig 110 auch thermisch nah beieinander angeordnet werden. Das bedeutet, dass sich Änderungen der Umgebungstemperatur auf beide Leiter 108, 112 auswirken, wie oben bereits erläutert.

Dabei kann das elektrische Energieübertragungssystems 100 aber derart dimensioniert sein, dass z.B. der Hauptenergieübertragungszweig 106 die größere elektrische Leistung überträgt und der Sekundärenergieübertragungszweig 110 nur einen geringen Teil der elektrischen Leistung überträgt. Der Sekundärenergieübertragungszweig 110 dient also nicht als redundanter Pfad.

In einer weiteren Ausführungsform können der Primärleiter sowie der Sekundärleiter den gleichen Querschnitt aufweisen, sodass im Fall ohne Schädigung eines Leiters die Energieübertragung symmetrisch erfolgt.

Vielmehr bilden der Hauptenergieübertragungszweig 106 und der Sekundärenergieübertragungszweig 110 mit den Widerständen 107, 111 und den Leitern 108, 112 eine Messbrücke. Die zu messende Spannung kann dabei an den Knotenpunkten 119, 120 abgegriffen werden.

Zur Erfassung des Zustands der Hauptenergieübertragungsleitung 108 misst die Messeinrichtung 118 die Spannung zwischen den Knotenpunkten 119, 120, auch Diagonalspannung oder Brückenquerspannung genannt.

Sind die Verhältnisse der Widerstände 107, 111 und der Widerstandswerte der Leitungen 108, 112 identisch, wird eine Brückenspannung von 0 gemessen. Die Verhältnisse können dabei z.B. durch Dimensionierung der Widerstände 107, 111 bzw. der Hauptenergieübertragungsleitung 108 und der Sekundärenergieübertragungsleitung 112 entsprechend eingestellt werden. Weicht die gemessene Spannung bei einer solchen Dimensionierung von null ab, liegt eine Widerstandsveränderung 121 der Hauptenergieübertragungsleitung 108 vor.

Selbstverständlich kann die Messbrücke auch verstimmt sein. Die Widerstandsverhältnisse sind dann nicht identisch. Liegt eine solche Messbrücke vor, kann z.B. ein Normalwert für die gemessene Spannung erfasst bzw. in der Produktion eingestellt oder kalibriert werden. Bei einer entsprechenden Abweichung von diesem Wert kann dann eine Degradation der Hauptenergieübertragungsleitung 108 erkannt werden.

Alternativ kann bei einer verstimmten Messbrücke auch direkt der Wert für den Widerstand der Hauptenergieübertragungsleitung 108 berechnet werden, wie oben bereits erläutert. Dazu kann in der Messeinrichtung 118 eine entsprechende Recheneinheit vorgesehen werden.

Es versteht sich, dass die Widerstände 107, 111 z.B. als Sicherungselemente für die Hauptenergieübertragungsleitung 108 und die Sekundärenergieübertragungsleitung 112 ausgebildet sein können.

Figur 2 zeigt ein Blockschaltbild elektrischen Energieübertragungssystems 200. Das Energieübertragungssystem 200 basiert auf dem Energieübertragungssystem 100. Folglich weist das Energieübertragungssystem 200 einen Hauptenergieübertragungszweig mit einem ersten Widerstand 207 und einer Hauptenergieübertragungsleitung 208 auf. Ferner weist das Energieübertragungssystem 200 einen Sekundärenergieübertragungszweig mit einem zweiten Widerstand 211 und einer Sekundärenergieübertragungsleitung 212 auf. Der erste Widerstand 207 und der zweite Widerstand 211 sind als Sicherungselemente ausgebildet.

Ferner weist die Hauptenergieübertragungsleitung 208 zwei Leitungssegmente 232, 233 auf, die durch Verbinder 234, 235, 236 kontaktiert und miteinander verbunden sind. Das Leitungssegment 238 der Sekundärenergieübertragungsleitung 212 wird durch Verbinder 239, 240 kontaktiert. Es versteht sich, dass mehr oder weniger Leitungssegmente in der Hauptenergieübertragungsleitung 208 bzw. der Sekundärenergieübertragungsleitung 212 vorhanden sein können.

Die Sekundärenergieübertragungsleitung 212 ist auf einer Platine über eine Sicherung 227 mit dem Ausgang der Hauptenergieübertragungsleitung 208 gekoppelt. Von diesem Knotenpunkt aus wird die elektrische Energie an den Verbraucher 250 übertragen.

Die Messeinrichtung 218 des Energieübertragungssystems 200 weist einen Differenzverstärker 229 auf, der die Spannung zwischen den Knotenpunkten 219, 220 misst und an eine Recheneinrichtung 242, z.B. einen Mikrocontroller, übermittelt.

Ferner ist ein Stromsensor 228 vorgesehen, der den Strom misst, welcher durch das Leistungssystem 245 bestehend aus Hauptenergieübertragungszweig und Sekundärenergieübertragungszweig fließt. Mit Hilfe dieses gemessenen Stroms und dem Gesamtwiderstand der Messbrücke kann die Spannung berechnet werden, die über der gesamten Messbrücke abfällt. Wie oben bereits erläutert, kann die Recheneinrichtung 242 mit diesen Werten den Widerstandswert der Hauptenergieübertragungsleitung 208 berechnen.

In einer weiteren Ausführungsform misst der Stromsensor den Strom des Primärpfades und wertet dafür den Spannungsabfall der Sicherung 207 aus.

Die Messeinrichtung 218 weist ferner einen Speicher 231 auf, der mit der Recheneinrichtung 242 und einer Kalibrierschnittstelle 230 gekoppelt ist. Über die Kalibrierschnittstelle 230 können diejenigen Werte in den Speicher 231 geschrieben werden, die nötig sind, um mit Hilfe der oben bereits erläuterten Formel den Widerstandswert für die Hauptenergieübertragungsleitung 208 zu berechnen. Es versteht sich, dass die Kalibrierschnittstelle 230 auch direkt an die Recheneinrichtung 242 gekoppelt sein kann und dass der Speicher 231 z.B. in der Recheneinrichtung 242 angeordnet sein kann.

Figur 3 zeigt ein herkömmliches Energieübertragungssystem. In dem herkömmlichen Energieübertragungssystem wird die elektrische Energie über einen einzelnen Leiter L von der Quelle Q zu dem Verbraucher V transportiert. Der Widerstand R1 stellt den Widerstand in der Zuleitung zu einem Stromverteiler SV dar, in dem eine Sicherung den Leiter L absichert. Ausgangsseitig wird die elektrische Leistung von dem Leiter L über eine Leiterplatte PCB zu dem Verbraucher V übertragen.

In dieser Anordnung wird eine Spannung gegen Masse (z.B. Fahrzeugmasse) in dem Stromverteiler SV gemessen. Eine zweite Spannung wird in dem Verbraucher V gemessen. Ferner kann der Strom durch den Leiter L erfasst werden.

Der Widerstand des Leiters L kann dann basierend auf der Formel R = U/I berechnet werden.

Die Nachteile dieser Art, den Widerstand des Leiters L zu bestimmen, wurden oben bereits im Detail erläutert.

Da es sich bei den vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft.

BEZUGSZEICHENLISTE

| | |
|---|---|
| 100, 200 | elektrisches Energieübertragungssystem |
| 101 | Leistungseingang |
| 102 | erster Verteilerknoten |
| 103 | Eingang |
| 104 | erster Ausgang |
| 105 | zweiter Ausgang |
| 106 | Hauptenergieübertragungszweig |
| 107, 207 | erster Widerstand |
| 108,208 | Hauptenergieübertragungsleitung |
| 109 | Ausgang |
| 110 | Sekundärenergieübertragungszweig |
| 111, 211 | zweiter Widerstand |
| 112, 212 | Sekundärenergieübertragungsleitung |
| 113 | Ausgang |
| 114 | zweiter Verteilerknoten |
| 115 | erster Eingang |
| 116 | zweiter Eingang |
| 117 | Leistungsausgang |
| 118, 218 | Messeinrichtung |
| 119, 120, 219, 220 | Knotenpunkt |
| 121,221 | Widerstandsveränderung |
| 227 | Sicherung |
| 228 | Stromsensor |
| 229 | Differenzverstärker |
| 230 | Kalibrierschnittstelle |

| 231 | Speicher |
| 232, 233, 238 | Leitungssegment |
| 234, 235, 236, 239, 240 | Verbinder |
| 241 | Platine |
| 242 | Recheneinrichtung |
| 245 | Leitungssystem |

| 150, 250 | elektrischer Verbraucher |
| 151, 251 | Energiequelle |

| Q | Quelle |
| R1 | Widerstand |
| SV | Stromverteiler |
| Si | Sicherung |
| L | Leiter |
| PCB | Leiterplatte |
| V | Verbraucher |
| M1, M2 | Spannungsmessung |

**Patentansprüche**

1. Elektrisches Energieübertragungssystem (100, 200) zur Übertragung elektrischer Energie an einen elektrischen Verbraucher (150, 250), aufweisend:

    einen Leistungseingang (101), welcher mit einer Energiequelle (151, 251) koppelbar ist und ausgebildet ist, elektrische Energie von der Energiequelle (151, 251) zu empfangen,
    einen ersten Verteilerknoten (102), welcher eingangsseitig mit dem Leistungseingang (101) gekoppelt ist und einen ersten Ausgang (104) und einen zweiten Ausgang (105) aufweist,
    einen Hauptenergieübertragungszweig (106), welcher eingangsseitig mit dem ersten Ausgang (104) des ersten Verteilerknotens (102) gekoppelt ist und eine Serienschaltung aus einem ersten Widerstand (107, 207) und einer Hauptenergieübertragungsleitung (108, 208) aufweist,
    einen Sekundärenergieübertragungszweig (110), welcher eingangsseitig mit dem zweiten Ausgang (105) des ersten Verteilerknotens (102) gekoppelt ist und eine Serienschaltung aus einem zweiten Widerstand (111, 211) und einer Sekundärenergieübertragungsleitung (112, 212) aufweist,
    einen zweiten Verteilerknoten (114), welcher eingangsseitig mit einem Ausgang (109) des Hauptenergieübertragungszweigs (106) und einem Ausgang (113) des Sekundärenergieübertragungszweigs (110) gekoppelt ist und welcher über einen Leistungsausgang (117) mit dem elektrischen Verbraucher (150, 250) koppelbar ist, und
    eine Messeinrichtung (118, 218), welche mit dem Knotenpunkt (119, 120, 219, 220) zwischen dem ersten Widerstand (107, 207) und der Hauptenergieübertragungsleitung (108, 208) und dem Knotenpunkt (119, 120, 219, 220) zwischen dem zweiten Widerstand (111, 211) und der Sekundärenergieübertragungsleitung (112, 212) gekoppelt ist und ausgebildet ist, zumindest eine Widerstandsveränderung (121, 221) der Hauptenergieübertragungsleitung (108, 208) basierend auf einer Spannungsmessung zwischen den Knotenpunkten (119, 120, 219, 220) zu bestimmen.

2. Elektrisches Energieübertragungssystem (100, 200) nach Anspruch 1, wobei der erste Widerstand (107, 207) als Sicherungselement ausgebildet ist und wobei der zweite Widerstand (111, 211) als Sicherungselement ausgebildet ist.

3. Elektrisches Energieübertragungssystem (100, 200) nach einem der vorherigen Ansprüche, wobei der Sekundärenergieübertragungszweig (110) eine Sicherung (227) aufweist, welche zwischen der Sekundärenergieübertragungsleitung (112, 212) und dem zweiten Verteilerknoten (114) angeordnet ist.

4. Elektrisches Energieübertragungssystem (100, 200) nach einem der vorherigen Ansprüche, wobei die Stromtragfähigkeit der Hauptenergieübertragungsleitung (108, 208) größer ist als die Stromtragfähigkeit der Sekundärenergieübertragungsleitung (112, 212).

5. Elektrisches Energieübertragungssystem (100, 200) nach einem der vorherigen Ansprüche, wobei der erste Widerstand (107, 207) als Sicherungselement mit einer größeren Stromtragfähigkeit ausgebildet ist, als der als Sicherungselement ausgebildete zweite Widerstand (111, 211).

6. Elektrisches Energieübertragungssystem (100, 200) nach einem der vorherigen Ansprüche, wobei das Widerstandsverhältnis zwischen der Hauptenergieübertragungsleitung (108, 208) und der Sekundärenergieübertragungsleitung (112, 212) größer oder kleiner ist als das Widerstandsverhältnis zwischen dem ersten Widerstand (107, 207) und dem zweiten Widerstand (111, 211).

7. Elektrisches Energieübertragungssystem (100, 200) nach einem der vorherigen Ansprüche, aufweisend einen Stromsensor (228), welcher ausgebildet ist, den Betrag des Stroms, welcher durch den Leistungseingang (101) des ersten Verteilerknotens (102) fließt zu erfassen und der Messeinrichtung (118, 218) bereitzustellen, wobei die Messeinrichtung (118, 218) ausgebildet ist, den Widerstandswert der Hauptenergieübertragungsleitung (108, 208) basierend auf der Spannungsmessung und dem gemessenen Betrag des Stroms zu bestimmen, oder aufweisend einen Differenzspannungsmesser, welcher ausgebildet ist den Betrag des Spannungsabfalls über dem ersten Widerstand (107,207) zu messen und der Messeinrichtung (118, 218) bereitzustellen, wobei die Messeinrichtung (118, 218) ausgebildet ist, den Widerstandswert der Hauptenergieübertragungsleitung (108, 208) basierend auf der Spannungsmessung (118,218) und der Spannungsmessung über dem ersten Widerstand (107, 207) zu bestimmen.

8. Elektrisches Energieübertragungssystem (100, 200) nach einem der vorherigen Ansprüche, wobei die Messeinrichtung (118, 218) ausgebildet ist, den Widerstandswert der Hauptenergieübertragungsleitung (108, 208) ferner basierend auf dem Widerstandswert der Sekundärenergieübertragungsleitung (112, 212) und dem Widerstandswert des ersten Widerstands (107, 207) und dem Widerstandswert des zweiten Widerstands (111, 211) zu berechnen.

9. Elektrisches Energieübertragungssystem (100, 200) nach Anspruch 8, wobei die Messeinrichtung (118, 218) einen Speicher (231) aufweist, welcher ausgebildet ist, den Widerstandswert der Sekundärenergieübertragungsleitung (112, 212) und den Widerstandswert des ersten Widerstands (107, 207) und den Widerstandswert des zweiten Widerstands (111, 211) zu speichern.

10. Elektrisches Energieübertragungssystem (100, 200) nach Anspruch 9, wobei die Messeinrichtung (118, 218) eine Kalibrierschnittstelle (230) aufweist, und ausgebildet ist, den Widerstandswert der Sekundärenergieübertragungsleitung (112, 212) und den Widerstandswert des ersten Widerstands (107, 207) und den Widerstandswert des zweiten Widerstands (111, 211) über die Kalibrierschnittstelle (230) zu empfangen.

11. Elektrisches Energieübertragungssystem (100, 200) nach einem der vorherigen Ansprüche, wobei die Messeinrichtung (118, 218) einen Differenzverstärker (229) aufweist, um die Spannungsmessung durchzuführen.

12. Elektrisches Energieübertragungssystem (100, 200) nach einem der vorherigen Ansprüche, wobei der erste Widerstand (107, 207) und der zweite Widerstand (111, 211) thermisch miteinander gekoppelt angeordnet sind.

13. Elektrisches Energieübertragungssystem (100, 200) nach einem der vorherigen Ansprüche, wobei die Hauptenergieübertragungsleitung (108, 208) und die Sekundärenergieübertragungsleitung (112, 212) thermisch miteinander gekoppelt angeordnet sind.

**Claims**

1. Electrical energy transfer system (100, 200) for transferring electrical energy to an electrical consumer (150, 250), having:

    a power input (101) that can be coupled to an energy source (151, 251) and is designed to receive electrical energy from the energy source (151, 251),
    a first distribution node (102) that is coupled, on the input side, to the power input (101) and has a first output (104) and a second output (105),
    a main energy transfer branch (106) that is coupled, on the input side, to the first output (104) of the first distribution node (102) and has a series circuit consisting of a first resistor (107, 207) and a main energy transfer line (108, 208),
    a secondary energy transfer branch (110) that is coupled, on the input side, to the second output (105) of the first distribution node (102) and has a series circuit consisting of a second resistor (111, 211) and a secondary energy transfer line (112, 212),

a second distribution node (114) that is coupled, on the input side, to an output (109) of the main energy transfer branch (106) and an output (113) of the secondary energy transfer branch (110), and that can be coupled to the electrical consumer (150, 250) via a power output (117), and

a measuring device (118, 218) that is coupled to the node (119, 120, 219, 220) between the first resistor (107, 207) and the main energy transfer line (108, 208) and the node (119, 120, 219, 220) between the second resistor (111, 211) and the secondary energy transfer line (112, 212) and is designed to determine at least one resistance change (121, 221) in the main energy transfer line (108, 208) based on a voltage measurement between the nodes (119, 120, 219, 220).

2.  Electrical energy transfer system (100, 200) according to Claim 1, wherein the first resistor (107, 207) is in the form of a fuse element and wherein the second resistor (111, 211) is in the form of a fuse element.

3.  Electrical energy transfer system (100, 200) according to either of the preceding claims, wherein the secondary energy transfer branch (110) has a fuse (227) that is arranged between the secondary energy transfer line (112, 212) and the second distribution node (114).

4.  Electrical energy transfer system (100, 200) according to one of the preceding claims, wherein the current-carrying capacity of the main energy transfer line (108, 208) is greater than the current-carrying capacity of the secondary energy transfer line (112, 212).

5.  Electrical energy transfer system (100, 200) according to one of the preceding claims, wherein the first resistor (107, 207) is in the form of a fuse element with a current-carrying capacity that is greater than the second resistor (111, 211) in the form of a fuse element.

6.  Electrical energy transfer system (100, 200) according to one of the preceding claims, wherein the resistance ratio between the main energy transfer line (108, 208) and the secondary energy transfer line (112, 212) is greater or smaller than the resistance ratio between the first resistor (107, 207) and the second resistor (111, 211) .

7.  Electrical energy transfer system (100, 200) according to one of the preceding claims, having a current sensor (228) that is designed to detect the magnitude of the current flowing through the power input (101) of the first distribution node (102) and to provide it to the measuring device (118, 218), wherein the measuring device (118, 218) is designed to determine the resistance value of the main energy transfer line (108, 208) based on the voltage measurement and the measured magnitude of the current, or
having a differential voltmeter that is designed to measure the magnitude of the voltage drop across the first resistor (107, 207) and to provide it to the measuring device (118, 218), wherein the measuring device (118, 218) is designed to determine the resistance value of the main energy transfer line (108, 208) based on the voltage measurement (118, 218) and the voltage measurement across the first resistor (107, 207).

8.  Electrical energy transfer system (100, 200) according to one of the preceding claims, wherein the measuring device (118, 218) is designed to calculate the resistance value of the main energy transfer line (108, 208) further based on the resistance value of the secondary energy transfer line (112, 212) and the resistance value of the first resistor (107, 207) and the resistance value of the second resistor (111, 211).

9.  Electrical energy transfer system (100, 200) according to Claim 8, wherein the measuring device (118, 218) has a memory (231) that is designed to store the resistance value of the secondary energy transfer line (112, 212) and the resistance value of the first resistor (107, 207) and the resistance value of the second resistor (111, 211).

10. Electrical energy transfer system (100, 200) according to Claim 9, wherein the measuring device (118, 218) has a calibration interface (230) and is designed to receive the resistance value of the secondary energy transfer line (112, 212) and the resistance value of the first resistor (107, 207) and the resistance value of the second resistor (111, 211) via the calibration interface (230).

11. Electrical energy transfer system (100, 200) according to one of the preceding claims, wherein the measuring device (118, 218) has a differential amplifier (229) to perform the voltage measurement.

12. Electrical energy transfer system (100, 200) according to one of the preceding claims, wherein the first resistor (107, 207) and the second resistor (111, 211) are arranged so as to be thermally coupled to one another.

13. Electrical energy transfer system (100, 200) according to one of the preceding claims, wherein the main energy transfer line (108, 208) and the secondary energy transfer line (112, 212) are arranged so as to be thermally coupled to one another.

**Revendications**

1. Système de transmission d'énergie électrique (100, 200) destiné à la transmission d'énergie électrique à un récepteur électrique (150, 250), comprenant :

une entrée de puissance (101), qui peut être connectée à une source d'énergie (151, 251) et qui est configurée pour recevoir de l'énergie électrique provenant de la source d'énergie (151, 251),
un premier nœud de distribution (102), dont l'entrée est connectée à l'entrée de puissance (101) et qui possède une première sortie (104) et une deuxième sortie (105),
une branche de transmission d'énergie principale (106), dont l'entrée est connectée à la première sortie (104) du premier nœud de distribution (102) et qui possède un circuit série composé d'une première résistance (107, 207) et d'une ligne de transmission d'énergie principale (108, 208),
une branche de transmission d'énergie secondaire (110), dont l'entrée est connectée à la deuxième sortie (105) du premier nœud de distribution (102) et qui possède un circuit série composé d'une deuxième résistance (111, 211) et d'une ligne de transmission d'énergie secondaire (112, 212),
un deuxième nœud de distribution (114), dont l'entrée est connectée à une sortie (109) de la branche de transmission d'énergie principale (106) et à une sortie (113) de la branche de transmission d'énergie secondaire (110) et qui peut être connecté au récepteur électrique (150, 250) par le biais d'une sortie de puissance (117), et
un dispositif de mesure (118, 218), qui est connecté au point nodal (119, 120, 219, 220) entre la première résistance (107, 207) et la ligne de transmission d'énergie principale (108, 208) et au point nodal (119, 120, 219, 220) entre la deuxième résistance (111, 211) et la ligne de transmission d'énergie secondaire (112, 212) et qui est configuré pour déterminer au moins une variation de résistance (121, 221) de la ligne de transmission d'énergie principale (108, 208) en se basant sur une mesure de tension entre les points nodaux (119, 120, 219, 220).

2. Système de transmission d'énergie électrique (100, 200) selon la revendication 1, la première résistance (107, 207) étant réalisée sous la forme d'un élément fusible et la deuxième résistance (111, 211) étant réalisée sous la forme d'un élément fusible.

3. Système de transmission d'énergie électrique (100, 200) selon l'une des revendications précédentes, la branche de transmission d'énergie secondaire (110) possédant un fusible (227) qui est disposé entre la ligne de transmission d'énergie secondaire (112, 212) et le deuxième nœud de distribution (114).

4. Système de transmission d'énergie électrique (100, 200) selon l'une des revendications précédentes, la capacité de charge en courant de la ligne de transmission d'énergie principale (108, 208) étant supérieure à la capacité de charge en courant de la ligne de transmission d'énergie secondaire (112, 212).

5. Système de transmission d'énergie électrique (100, 200) selon l'une des revendications précédentes, la première résistance (107, 207) étant réalisée sous la forme d'un élément fusible ayant une capacité de charge en courant supérieure à celle de la deuxième résistance (111, 211) réalisée sous la forme d'un élément fusible.

6. Système de transmission d'énergie électrique (100, 200) selon l'une des revendications précédentes, le rapport de résistance entre la ligne de transmission d'énergie principale (108, 208) et la ligne de transmission d'énergie secondaire (112, 212) étant supérieur ou inférieur au rapport de résistance entre la première résistance (107, 207) et la deuxième résistance (111, 211).

7. Système de transmission d'énergie électrique (100, 200) selon l'une des revendications précédentes, possédant un capteur de courant (228) qui est configuré pour détecter la valeur du courant qui circule à travers la première entrée de puissance (101) du premier nœud de distribution (102) et la mettre à disposition du dispositif de mesure (118, 218), le dispositif de mesure (118, 218) étant configuré pour déterminer la valeur de la résistance de la ligne de transmission d'énergie principale (108, 208) en se basant sur la mesure de la tension et la valeur mesurée du courant, ou
possédant un mesureur de tension différentielle qui est configuré pour mesurer la valeur de la chute de tension aux bornes de la première résistance (107, 207) et la mettre à disposition du dispositif de mesure (118, 218), le dispositif de mesure (118, 218) étant configuré pour déterminer la valeur de la résistance de la ligne de transmission d'énergie principale (108, 208) en se basant sur la mesure de la tension (118, 218) et la mesure de tension aux bornes de la première résistance (107, 207).

8. Système de transmission d'énergie électrique (100, 200) selon l'une des revendications précédentes, le dispositif de mesure (118, 218) étant configuré pour calculer la valeur de la résistance de la ligne de transmission d'énergie principale (108, 208) en se basant en plus sur la valeur de la résistance de la ligne de transmission d'énergie secondaire (112, 212) et la valeur de la résistance de la première résistance (107, 207) et la valeur de la résistance de la deuxième résistance (111, 211).

9. Système de transmission d'énergie électrique (100, 200) selon la revendication 8, le dispositif de mesure (118, 218) possédant une mémoire (231) qui est configurée pour mémoriser la valeur de la résistance de la ligne de transmission d'énergie secondaire (112, 212) et la valeur de la résistance de la première résistance (107, 207) et la valeur de la résistance de la deuxième résistance (111, 211).

10. Système de transmission d'énergie électrique (100, 200) selon la revendication 9, le dispositif de mesure (118, 218) possédant une interface d'étalonnage (230) et étant configuré pour recevoir la valeur de la résistance de la ligne de transmission d'énergie secondaire (112, 212) et la valeur de la résistance de la première résistance (107, 207) et la valeur de la résistance de la deuxième résistance (111, 211) par le biais de l'interface d'étalonnage (230).

11. Système de transmission d'énergie électrique (100, 200) selon l'une des revendications précédentes, le dispositif de mesure (118, 218) possédant un amplificateur différentiel (229) afin de réaliser la mesure de tension.

12. Système de transmission d'énergie électrique (100, 200) selon l'une des revendications précédentes, la première résistance (107, 207) et la deuxième résistance (111, 211) étant disposées en étant couplées thermiquement l'une à l'autre.

13. Système de transmission d'énergie électrique (100, 200) selon l'une des revendications précédentes, la ligne de transmission d'énergie principale (108, 208) et la ligne de transmission d'énergie secondaire (112, 212) étant disposées en étant couplées thermiquement l'une à l'autre.

EP 3 650 281 B1

Fig. 1

Fig. 2

15

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014207993 A1
- DE 102017108516 B3